# EUROPÄISCHE PATENTSCHRIFT

(11) **EP 1 999 048 B1**
(45) Veröffentlichungstag und Bekanntmachung des Hinweises auf die Patenterteilung: **28.04.2010**
(21) Anmeldenummer: 07723292.4
(22) Anmeldetag: 16.03.2007
(51) Int. Cl.: B65G 47/84

(54) **GREIFELEMENT**
GRIPPING ELEMENT
ÉLÉMENT DE SAISIE

(30) Priorität: 23.03.2006 DE 202006004641 U
(43) Veröffentlichungstag der Anmeldung: 10.12.2008
(73) Patentinhaber: KRONES Aktiengesellschaft, 93073 Neutraubling (DE)
(72) Erfinder: ALBRECHT, Thomas, 92339 Beilngries (DE)
(74) Vertreter: Bittner, Bernhard
(86) Internationale Anmeldenummer: PCT/EP2007/002310
(87) Internationale Veröffentlichungsnummer: WO 2007/110157

(56) Entgegenhaltungen:
- DE-A1- 19 513 221
- DE-A1-102005 002 715
- DE-U1- 20 020 456

## Beschreibung

Die vorliegende Erfindung bezieht sich auf ein Greifelement, insbesondere für Behältnisse. In Herstellungsanlagen für Flaschen kommen diverse Transporteinrichtungen für diese Behältnisse oder Flaschen zum Einsatz. Diese Transporteinrichtungen weisen Greifer auf, die die einzelnen Flaschen beispielsweise an deren Hals führen. Die folgende Erfindung wird unter Bezugnahme auf eine Klammer zum Halten von Kunststoffflaschen dargestellt. Derartige Klammern werden auch als Neckhandlingklammern bezeichnet.

Derartige Klammern sind aus dem Stand der Technik bekannt. Solche Greifelemente greifen an den Flaschen an und führen sie auf diese Weise durch die entsprechende Transporteinrichtung. Dabei gewährleisten die Klammern einen stabilen Halt der Flasche. Während des Herstellungsprozesses der Flaschen tritt jedoch das Problem auf, dass die Flaschen nach einem Ausdehnprozess noch warm sind und das Material sich daher noch relativ leicht verformt. Die nach dem Stand der Technik eingesetzten Klammern üben jedoch eine so große Kraft auf den Flaschenhals aus, dass dieser sich verformt. Diese Verformungen führen zu Nuten oder Einkerbungen am Flaschenhals, die als störend empfunden werden.

Der vorliegenden Erfindung liegt daher die Aufgabe zugrunde, ein Greifelement zur Verfügung zu stellen, welches bewirkt, dass die von diesem ergriffenen Flaschen nicht mehr verformt werden.

Dies wird erfindungsgemäß durch ein Greifelement nach Anspruch 1 erreicht. Vorteilhafte Ausführungsformen und Weiterbildungen sind Gegenstand der Unteransprüche.

Das erfindungsgemäße Greifelement, insbesondere für Behältnisse, weist einen Basisabschnitt und zwei Arme auf, wobei diese Arme gegeneinander bewegbar sind. Dabei weisen die Arme jeweils einen Halteabschnitt zum Halten der Behältnisse auf. Erfindungsgemäß weist wenigstens ein Arm zwischen dem Halteabschnitt und dem Basisabschnitt eine Krümmung von mehr als 90° auf. Insbesondere können die Arme auseinander gedrückt werden und üben in einem auseinandergedrückten Zustand eine in Richtung des jeweils anderen Arms gerichtete Federkraft aus.

Unter einem Basisabschnitt wird insbesondere ein zentraler Abschnitt des Greifelements verstanden, von dem aus sich die beiden Arme erstrecken. Die einzelnen Behältnisse bzw. insbesondere die Flaschenhälse werden zwischen die Arme eingeschoben. Während des Einschiebevorgangs werden die beiden Arme leicht auseinandergedrückt und daher wirkt eine Federkraft auf die zwischen die Arme eingeführten Behältnisse.

Erfindungsgemäß ist wenigstens ein vorgegebener Abschnitt der Arme um mehr als 90° gekrümmt. Durch den gekrümmten Endabschnitt kann die Gesamtlänge der Arme, d. h. deren effektive Federlänge verlängert werden, ohne dass gleichzeitig der Abstand zwischen dem Basisabschnitt und dem Halteabschnitt vergrößert wird. Durch die Verlängerung der Armlänge wird gleichzeitig bei gleich bleibenden Materialien die Klammerkraft auf die gehaltenen Flaschenhälse reduziert. Durch diese Reduzierung kann eine Verformung der Flaschenhälse verhindert werden. Der Abschnitt zwischen dem Basisabschnitt und dem Halteabschnitt sollte gering gehalten werden, da zu hohe Abstände den Transport der Behältnisse behindern.

Vorzugsweise ist der Arm um mehr als 120°, bevorzugt um mehr als 130°, bevorzugt um mehr als 140°, bevorzugt um mehr als 150°, bevorzugt um mehr als 160°, bevorzugt um mehr als 170° und besonders bevorzugt um mehr als 180° gekrümmt. Dabei kann die Krümmung eine kreisrunde Form, eine ellipsenförmige Form, eine polygonale Form oder Kombinationen hieraus annehmen.

Vorzugsweise weisen beide Arme eine Krümmung von mehr als 90° zwischen dem Basisabschnitt und dem Halteabschnitt auf. Besonders bevorzugt ist wenigstens ein Arm und besonders bevorzugt sind beide Arme nach innen bezüglich eines Aufnahmebereichs für die Behältnisse bzw. für deren Hälse gekrümmt. Damit sind die Haltebereiche auf das zu haltende Behältnis bzw. den jeweiligen Flaschenhals hingekrümmt. Vorteilhafterweise ist das Greifelement im Wesentlichen symmetrisch ausgebildet und die beiden Arme sind bezüglich einer Symmetrieebene symmetrisch angeordnet. Damit sind bevorzugt die beiden Halteabschnitte bei dieser Ausführungsform in Richtung der Symmetrieebene gekrümmt.

Bei einer weiteren bevorzugten Ausführungsform ist das Greifelement einteilig ausgebildet. Der Vorteil dieser Ausführungsform besteht darin, dass das Greifelement durch einen einzelnen Herstellungsvorgang, wie beispielsweise einen Spritzvorgang gefertigt werden kann.

Vorteilhafterweise besteht das Greifelement aus einem Kunststoff und besonders bevorzugt aus einem einheitlichen Kunststoff, wobei das Material über das gesamte Volumen des Greifelements hinweg die gleichen Eigenschaften aufweist. Bei einer weiteren bevorzugten Ausführungsform ist der Kunststoff aus einer Gruppe von Kunststoffen ausgewählt, welche PEEK, POM, Luvocom, Latan, PTFE, PU, Kombinationen hieraus und dergleichen und insbesondere PEEK enthält. Das Material PEEK eignet sich aufgrund seiner physikalischen Eigenschaften in besonderer Weise für die erfindungsgemäßen Greifelemente.

Bei einer weiteren bevorzugten Ausführungsform weist das erfindungsgemäße Greifelement wenigstens eine Einführschräge auf. Bevorzugt weisen beide Arme jeweils eine Einführschräge auf, die symmetrisch zueinander bezüglich einer Symmetrieebene angeordnet sind.

Vorzugsweise ist die Einführschräge in einem Winkel im Bereich von 25° - 45° gegenüber der Symmetrieebene bzw. einer Längsrichtung des Greifelements angeordnet. Durch diesen relativ flachen Winkel wird erreicht, dass sich beim Einfahren des Flaschenhalses in das Greifelement die beiden Arme leicht zur Seite biegen, wobei hierbei die gesamte gestreckte Länge der Arme zum Tragen kommt, d. h. der Bereich, der maßgeblich wäre, wenn die Krümmung nicht vorhanden wäre. Dies bedeutet, dass eine nur relativ kleine Kraft nötig ist, um die Flasche in das Greifelement einzubringen.

Bei einer weiteren bevorzugten Ausführungsform weist wenigstens ein Arm eine an dem Halteabschnitt vorgesehene Haltefläche auf, die vorzugsweise wenigstens abschnittsweise an einen zu greifenden Abschnitt des Behältnisses angepasst ist. Vorzugsweise ist die Anlagefläche an den jeweils zu greifenden Flaschenhals angepasst. Durch das Vorsehen einer Haltefläche anstelle einer Spitze oder einer nur geringen Fläche, kann ebenfalls der Bildung von Verformungen oder Einsenkungen in dem noch warmen Flaschenhals entgegengewirkt werden.

Bei einer weiteren bevorzugten Ausführungsform weist wenigstens ein Arm einen nach innen ragenden Stegabschnitt auf. Bevorzugt weisen beide Arme jeweils Stegabschnitte auf, die sich in Richtung der Symmetrieebene erstrecken und damit aufeinander zu gerichtet sind.

Besonders vorteilhaft besitzt wenigstens ein Stegabschnitt eine Anlagefläche, die wenigstens abschnittsweise an einen zu greifenden Abschnitt des Behältnisses angepasst ist. Damit greift besonders bevorzugt auch die Anlagefläche an dem jeweiligen Flaschenhals an, sodass der Flaschenhals sowohl von den Halteflächen als auch den Anlageflächen geführt wird.

Bevorzugt ist wenigstens eine weitere Anlagefläche in einer Richtung vergrößert, die im Wesentlichen senkrecht zu einer von den Armen gebildeten Ebene steht. Damit erstreckt sich diese Vergrößerung in Richtung der Mittelebene. Auch auf diese Weise kann eine Flächenvergrößerung erreicht werden und damit das Risiko eines Eindrückens des Flaschenhalses verringert werden.

Bei einer weiteren bevorzugten Ausführungsform weist wenigstens ein Arm einen im Wesentlichen kreisförmig gekrümmten Haltebereich auf. Diese Haltebereich liegt besonders bevorzugt an einem größeren Abschnitt des Umfangs des Flaschenhalses an und auch so kann das Entstehen von Verformungen verhindert werden.

Besonders bevorzugt ist an wenigstens einem Arm ein Vorsprung vorgesehen, der in Richtung des kreisförmig gekrümmten Haltebereichs weist. Durch das Vorsehen dieses Vorsprungs kann der Bereich, um den der Haltebereich um den gekrümmten Abschnitt gebogen werden kann, verringert werden.

Bei einer weiteren bevorzugten Ausführungsform nimmt die Dicke wenigstens eines Arms in einer Richtung, die zu der von den Greifarmen aufgespannten Ebene senkrecht steht, in Richtung des Halteabschnitts ab. Diese Vorgehensweise dient einerseits der Materialeinsparung und andererseits kann durch die angepasste Dicke auch die Federwirkung des Greifelements in besonders vorteilhafter Weise eingestellt werden.

Die vorliegende Erfindung ist weiterhin auf eine Vorrichtung zum Transportieren von Behältnissen mit einer Greifeinrichtung der oben beschriebenen Art gerichtet.

Weitere Vorteile und Ausführungsformen ergeben sich aus den beigefügten Zeichnungen.

Darin zeigen:
- Fig. 1: ein erfindungsgemäßes Greifelement in einer ersten Ausführungsform;
- Fig. 2: eine weitere Darstellung des Greifelements aus Fig. 1;
- Fig. 3: eine weitere Darstellung des Greifelements aus Fig. 1;
- Fig. 4: eine weitere Darstellung des Greifelements aus Fig. 1;
- Fig. 5: ein erfindungsgemäßes Greifelement in einer zweiten Ausführungsform;
- Fig. 6: eine weitere Darstellung des Greifelements aus Fig. 5;
- Fig. 7: eine weitere Darstellung des Greifelements aus Fig. 5;
- Fig.8: eine weitere Darstellung des Greifelements aus Fig. 5; und
- Fig. 9: ein Diagramm und zur Veranschaulichung der von dem erfindungsgemäßen Greifelement erzeugten Klemmkraft.

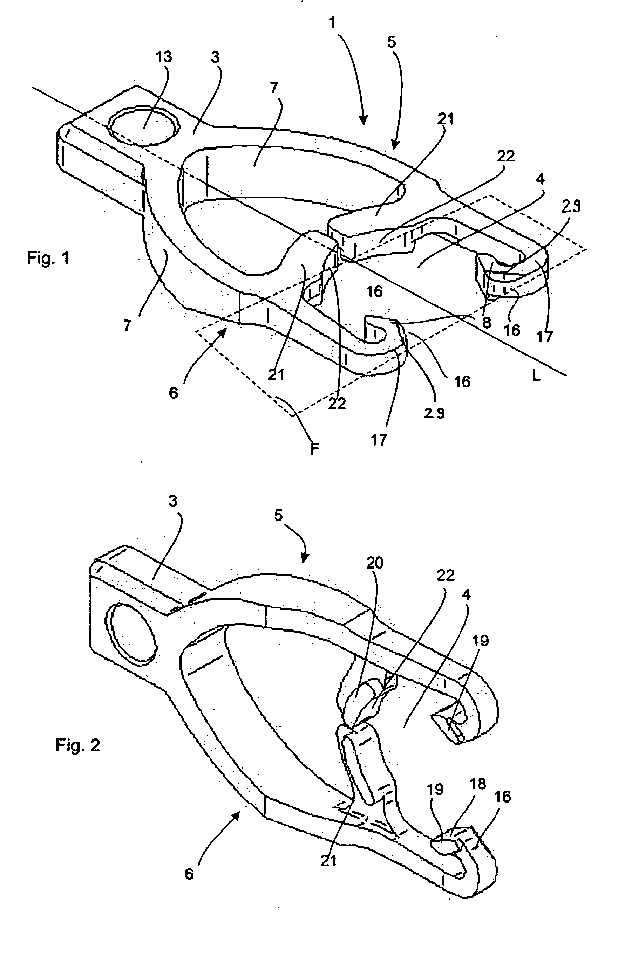

Fig. 1 zeigt ein erfindungsgemäßes Greifelement 1 in einer ersten Ausführungsform. Dieses Greifelement 1 weist einen Basisabschnitt 3 auf, der mittels einer Öffnung 13 an einer (nicht gezeigten) Vorrichtung zum Transportieren von Behältnissen befestigt werden kann. An diesem Basisabschnitt 3 sind zwei Arme 5, 6 vorgesehen. Diese Arme weisen jeweils einen Grundabschnitt 7 auf. An den jeweiligen Enden der Arme sind Halteabschnitte 8 zum Halten von Flaschen bzw. Flaschenhälsen angeordnet. Daneben sind an beiden Armen gekrümmte Abschnitte 17 vorgesehen, wobei hier der Krümmungswinkel im Bereich von 180° liegt, d.h die gekrümmten Abschnitte um ca. 180° gekrümmt sind. Neben den hier gezeigten Krümmungswinkel wären jedoch auch etwas geringere oder größere Krümmungswinkel möglich.

Das Bezugszeichen 16 bezieht sich auf eine Einführschräge zum Einführen der Behältnisse bzw. der Flaschenhälse in einen Aufnahmebereich 4 des Greifelements. Das Bezugszeichen 21 bezieht sich auf ebenfalls an den Armen 5, 6 angeordnete Stege, die aufeinander zugerichtet sind. An diesen Stegen sind Anlageflächen 22 vorgesehen, an denen der (nicht gezeigte) Flaschenhals anliegt. Damit wird der Flaschenhals durch diese Anlageflächen 22 unter die Halteabschnitte 8 gehalten.

Die Einführschrägen sind gegenüber einer Längsrichtung L des Greifelements um einen Winkel im Bereich von 20° bis 50° und bevorzugt um einen Winkel im Bereich von 30° bis 40° geneigt. Des weiteren weisen die Einführschrägen 16 Abflachungen 29 auf, die gegenüber der Ebene F nach unten geneigt sind. Diese Abflachungen 29 unterstützen die Einführschrägen 16 in positiver Weise, sodass Behälter durch diesen "Trichtereffekt" besser in das Greifelement 1 eingeführt werden können.

Bei der in Fig. 1 gezeigten Ausführungsform verläuft die Krümmung in der Ebene F, die von den beiden Armen 5, 6 aufgespannt wird. Es wäre jedoch auch möglich, dass die Krümmung in einer anderen Ebene verläuft, beispielsweise im Wesentlichen senkrecht zu der Ebene F. Daneben könnte der Abschnitt 17 auch mehrere insbesondere in unterschiedlichen Ebenen verlaufende Krümmungen aufweisen. Auch auf diese Weise könnte die effektive Federlänge des Greifelements erhöht werden.

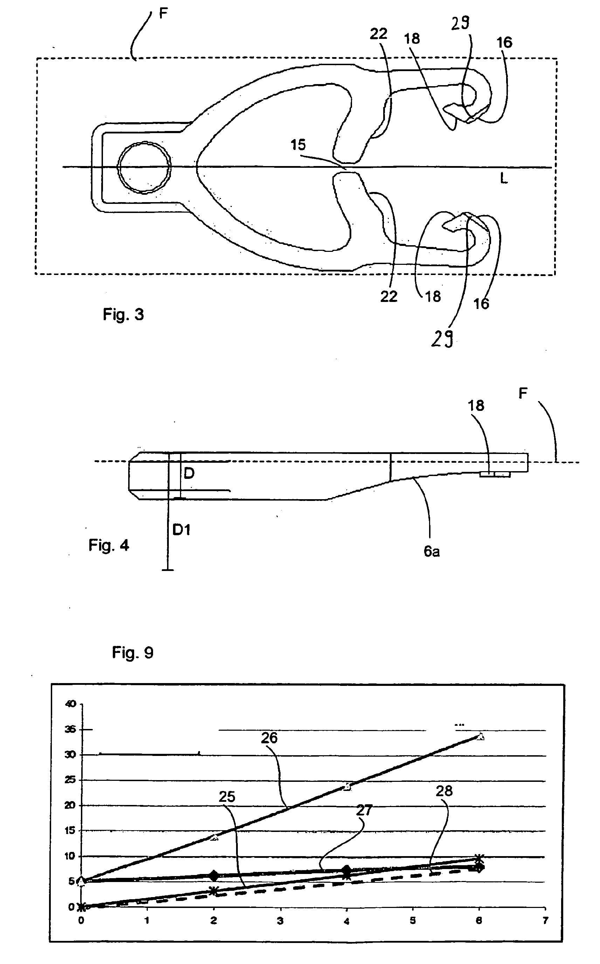

Schließlich wäre es auch möglich, eine Krümmung in dem Grundabschnitt 7 vorzusehen, wie beispielsweise eine Krümmung um 360° bzw. eine spiralförmige Krümmung. Diese Krümmung könnte sowohl in der Ebene F als auch in anderen Ebenen und insbesondere auch senkrecht zu der Ebene F verlaufen. Des weiteren könnten auch mehrere Krümmungen vorgesehen sein, etwa sowohl in dem Grundabschnitt 7 als auch in dem gekrümmten Abschnitt 17 oder auch in dem Übergangsbereich 6a (vgl. Fig. 4) zwischen dem gekrümmten Abschnitt 17 und den Stegen 21.

Fig. 2 zeigt eine Seitenansicht des Greifelements aus Fig. 1. Man erkennt, dass an den Stegen 21 jeweils Vorsprünge 20 angeordnet sind, die zum Vergrößern der Anlageflächen 22 dienen. Das Bezugszeichen 18 bezieht sich auf eine Anlagefläche an dem Halteabschnitt 8. Auch diese Anlagefläche wird durch Vorsprünge 19 vergrößert. Damit wird der Flaschenhals durch die beiden Anlageflächen 22 und die Anlagenflächen 18 gehalten.

Die Anlagenflächen 18 können in ihrer Ausgestaltung an dem Außenumfang des zu greifenden Behältnisses angepasst sein, sie können jedoch auch beispielsweise im Wesentlichen eben ausgeführt sein.

Fig. 3 zeigt eine Draufsicht auf das Greifelement aus Fig. 1. Zwischen den beiden Stegen 21 ist ein Spalt 15 vorgesehen, der ein allzu starkes Zusammendrücken der Arme 5,6 gegeneinander verhindert.

Fig. 4 zeigt eine Seitenansicht des Greifelements aus Fig. 3. Man erkennt, dass die Arme 5, 6 eine Übergangsbereich 6a aufweisen, in dem die Dicke hin zu dem Halteabschnitt 18 abnimmt. Dabei erfolgt die Abnahme in Form einer stetigen Krümmung, um eine günstige Kräfteverteilung zu erreichen. Der Basisabschnitt 3 weist eine vorgegebene Dicke D auf. Es wäre jedoch auch möglich, diesen Basisabschnitt mit einer abweichenden Dicke D1 auszuführen.

Das in den Figuren 1 - 4 gezeigte Greifelement kann je nach der zu greifenden Flasche in unterschiedlichen Durchmessern ausgeführt werden.

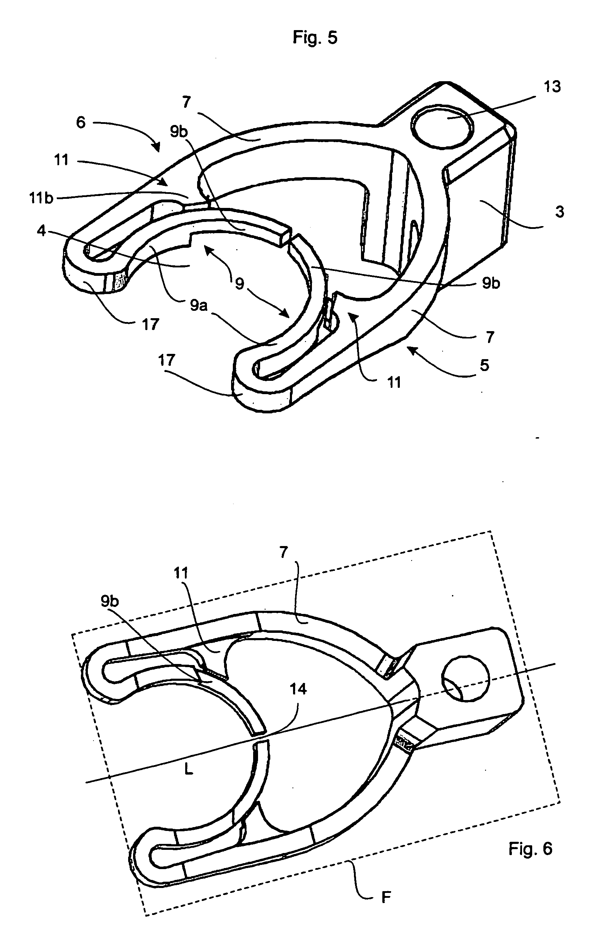

Fig. 5 zeigt eine weitere Ausführungsform des erfindungsgemäßen Greifelements. Der wesentliche Unterschied zu dem in den Figuren 1 - 4 gezeigten Greifelement besteht in der Ausgestaltung des Halteabschnitts 9. Bei der in Fig. 5 gezeigten Ausführungsform ist ein Halteabschnitt 9 vorgesehen, der einen wesentlichen Bereich des Flaschenhalses umgibt. Dieser Halteabschnitt 9 weist einen ersten Teilbereich 9a und einen diesem gegenüber abgestuften zweiten Teilbereich 9b mit einer geringeren Dicke auf. Zwischen diesem Halteabschnitt 9 und dem Grundabschnitt 7 ist ebenfalls wieder der gekrümmte Bereich 17 angeordnet. Bei dieser Ausführungsform sind an dem Grundabschnitt 7 Vorsprünge 11 vorgesehen, die in Richtung des Halteabschnitts 9 weisen und nur ein bestimmtes Auseinanderbiegen der beiden Halteabschnitte 9 zulassen.

Fig. 6 zeigt eine weitere Ansicht des in Fig. 5 gezeigten Halteelements. Bei dieser Ausführungsform ist ein Spalt 14 erkennbar, der so ausgelegt ist, dass ein zu weites Zusammendrücken der beiden Halteabschnitte 8 verhindert wird.

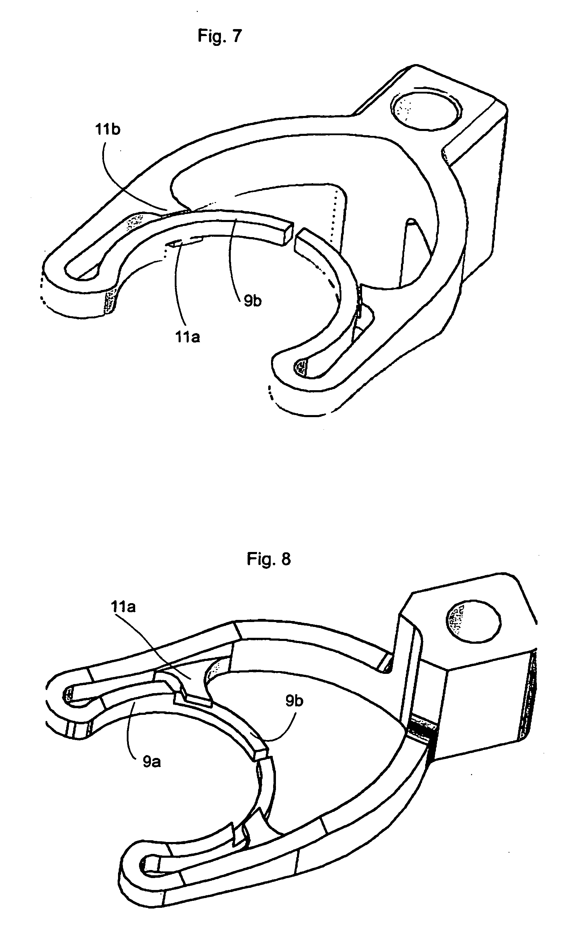

Fig. 7 zeigt eine weitere Darstellung des in Fig. 6 gezeigten Greifelements. Man erkennt, dass der Vorsprung 11 einen unteren Teilabschnitt 11a und einen oberen Teilabschnitt 11b aufweist, wobei diese Abschnitte 11a 11b stufenartig ausgeführt sind und der untere Teilabschnitt 11a weiter nach innen ragt. Oberhalb dieses unteren Teilabschnitts 11a ist der Teilbereich 9b des Halteabschnitts 9 vorgesehen. Damit wird der Teilbereich 9b durch den unteren Teilabschnitt 11a des Vorsprungs 9 geführt und an einem Verbiegen in bezüglich der Ebene F senkrechter Richtung gehindert. Auf diese Weise können Flaschenhälse durch den Halteabschnitt 9 gegriffen werden und der Abschnitt 11a verhindert, dass sich der Halteabschnitt 9 in Fig. 7 nach unten verbiegt. Gleichzeitig ist eine Bewegung der Teilbereiche 9a und 9b in der Ebene F des Greifelements möglich.

Fig. 8 zeigt das Greifelement aus Fig. 7 in einer Ansicht von unten. Man erkennt, dass der Abschnitt 11a den Teilbereich 9b wenigstens teilweise führt. Es wäre bei dieser Ausführungsform auch möglich, einen weiteren Teilabschnitt entsprechend dem Teilabschnitt 11a vorzusehen, der bewirkt, dass der Teilbereich 9b des Halteabschnitts 9 auch von oben her geführt wird. Die Länge des Abschnitts 11a ist bevorzugt so gewählt, dass auch bei einem Auseinanderdrücken der beiden Halteabschnitte 9 der Abschnitt 11a nicht mit dem Behältnis in Berührung kommt und auf diese Weise ein Entstehen von Verformungen durch den Abschnitt 11a verhindert wird. Auch bei der in den Fig. 5 - 8 gezeigten Variante verläuft die Krümmung in der Ebene F, es wären jedoch auch hier die oben in Bezug auf die Krümmung erwähnten Modifikationen möglich.

Fig. 9 zeigt ein Diagramm zur Veranschaulichung der Klammerkraft des Greifelements. Dieses Diagramm wurde mit einer Hilfe einer Zug-Druckmaschine im Labor aufgenommen. Dabei bezieht sich das Bezugszeichen 26 auf die Kennlinie eines Greifelements nach dem Stand der Technik. Auf der Ordinate ist die Dehnung des Greifelements, d. h. der Grad des Auseinanderdrückens der beiden Arme in Millimetern dargestellt und auf der Y-Achse die ausgeübte Klammerkraft in N. Man erkennt, dass im Falle des aus dem Stand der Technik bekannten Greifelements die Klammerkraft hohe Werte bis über 30 N annimmt. Das Bezugszeichen 27 bezieht sich auf die Kennlinie eines erfindungsgemäß gefederten Greifelements. Das Bezugszeichen 25 bezieht sich auf ein optimiertes Greifelement. Man erkennt, dass in beiden Fällen auch bei Dehnungen vom mehr 6 Millimetern die Klammerkraft nicht über 10 und im Falle des gefederten Greifelements nicht über 8 N ansteigt. Da die verwendete Zug-Druckmaschine für Kräfte unter 5 N unzuverlässige Ergebnisse ausgibt, wurde weiterhin eine Kennlinie berechnet, die durch das Bezugszeichen 28 gekennzeichnet ist. Auch für diesen Kraftwegverlauf zeigt sich, dass die Klammerkraft nicht über 8 N ansteigt.

Es versteht sich für den Fachmann von selbst, dass das Greifelement auch anders ausgebildet sein kann, so zum Beispiel als zwei- oder mehrteiliges Greifelement, bei dem z.B. am Basisabschnitt die Arme mittels Befestigungselementen angebracht sind. Weiterhin können die Greifelemente selbstverständlich auch aus anderen Materialien bestehen, wie zum Beispiel Metallen.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Greifelemente (1), insbesondere für Behältnisse, mit einem Basisabschnitt (3) und zwei sich von dem Basisabschnitt (3) aus erstreckenden Armen (5,6), wobei die Arme (5,6) bewegt werden können und wobei die Arme (5,6) jeweils einen Halteabschnitt (8,9) zum Halten des Behältnisses aufweisen,
**dadurch gekennzeichnet, dass** wenigstens ein Arm (5,6) zwischen dem Basisabschnitt (3) und dem Halteabschnitt (8,9) eine Krümmung von mehr als 90° aufweist, welche die effektive Federlänge des Arms (5, 6) verlängert ohne den Abstand zwischen Basisabschnitt (3) und Halteabschnitt (8, 9) zu vergrößern.

2. Greifelement nach Anspruch 1
**dadurch gekennzeichnet, dass** beide Arme (5,6) eine Krümmung von mehr als 90°aufweisen.

3. Greifelement nach wenigstens einem der vorangegangenen Ansprüche,
**dadurch gekennzeichnet, dass** wenigstens ein Arm (5, 6) und bevorzugt beide Arme (5,6) bezüglich eines Aufnahmebereichs (4) für die Behältnisse nach innen gekrümmt sind.

4. Greifelement nach wenigstens einem der vorangegangenen Ansprüche,
**dadurch gekennzeichnet, dass** das Greifelement (1) einteilig ausgebildet ist.

5. Greifelement nach wenigstens einem der vorangegangenen Ansprüche,
**dadurch gekennzeichnet, dass** das Greifelement (1) aus einem Kunststoff besteht.

6. Greifelement nach Anspruch 5
**dadurch gekennzeichnet, dass** der Kunststoff aus einer Gruppe von Kunststoffen ausgewählt ist, welche PEEK, POM, Luvocom, Latan, PEPA, PTFE, Kombinationen hieraus und dergleichen und insbesondere PEEK enthält.

7. Greifelement nach wenigstens einem der vorangegangenen Ansprüche,
**dadurch gekennzeichnet, dass** wenigstens ein Arm eine Einführschräge (16) aufweist.

8. Greifelement nach wenigstens einem der vorangegangenen Ansprüche,
**dadurch gekennzeichnet, dass** wenigstens ein Arm (5,6) eine an dem Halteabschnitt (8,9) vorgesehene Haltefläche (18) aufweist, die wenigstens abschnittsweise an einen zu greifenden Abschnitt des Behältnisses angepasst ist.

9. Greifelement nach wenigstens einem der vorangegangenen Ansprüche,
**dadurch gekennzeichnet, dass** wenigstens ein Arm (5, 6) einen nach innen ragenden Steg (21) aufweist.

10. Greifelement nach Anspruch 9,
**dadurch gekennzeichnet, dass** wenigstens ein Stegabschnitt (21) eine Anlagefläche (22) aufweist, die wenigstens abschnittsweise an einen zu greifenden Abschnitt des Behältnisses angepasst ist.

11. Greifelemente nach wenigstens einem der vorangegangenen Ansprüche,
**dadurch gekennzeichnet, dass** wenigstens eine Anlagefläche (22) in einer Richtung vergrößert ist, die im wesentlichen senkrecht zu einer von den Armen (5, 6) gebildeten Ebene steht.

12. Greifelement nach wenigstens einem der vorangegangenen Ansprüche,
**dadurch gekennzeichnet, dass** wenigstens ein Arm (5,6) einen im wesentlichen kreisförmig gekrümmten Halteabschnitt (9) aufweist.

13. Greifelement nach Anspruch 12
**dadurch gekennzeichnet, dass** an wenigstens einem Arm (5,6) ein Vorsprung (11) vorgesehen ist, der in Richtung des kreisförmig gekrümmten Halteabschnitts (9) weist.

14. Greifelement nach wenigstens einem der vorangegangenen Ansprüche
**dadurch gekennzeichnet, dass** die Dicke wenigstens eines Arms (5, 6) in einer Richtung, die zu der von den Greifarmen aufgespannten Ebene senkrecht steht, in Richtung des Halteabschnitts (8,9) abnimmt.

15. Vorrichtung zum Transportieren von Behältnissen mit einem Greifelement (1) nach wenigstens einem der vorangegangenen Ansprüche.

## Claims

1. Gripping element (1), in particular for containers, comprising a base portion (3) and two arms (5, 6) which extend from the base portion (3), wherein the arms (5, 6) can be moved and wherein the arms (5, 6) in each case have a holding portion (8, 9) for holding the container, **characterised in that** at least one arm (5, 6) has a curvature of more than 90° between the base portion (3) and the holding portion (8, 9), which elongates the effective spring length of the arm (5, 6) without increasing the distance between the base portion (3) and the holding portion (8, 9).

2. Gripping element according to claim 1, **characterised in that** both arms (5, 6) have a curvature of more than 90°.

3. Gripping element according to at least one of the preceding claims, **characterised in that** at least one arm (5, 6) and preferably both arms (5, 6) are curved inwards relative to a receiving area (4) for the containers.

4. Gripping element according to at least one of the preceding claims, **characterised in that** the gripping element (1) is formed in one piece.

5. Gripping element according to at least one of the preceding claims, **characterised in that** the gripping element (1) is made from a plastic.

6. Gripping element according to claim 5, **characterised in that** the plastic is selected from a group of plastics comprising PEEK, POM, Luvocom, Latan, PEPA, PTFE, combinations thereof and the like, and in particular PEEK.

7. Gripping element according to at least one of the preceding claims, **characterised in that** at least one arm has an introduction bevel (16).

8. Gripping element according to at least one of the preceding claims, **characterised in that** at least one arm (5, 6) has a retaining surface (18) which is provided on the holding portion (8, 9) and which is adapted at least partially to a portion of the container that is to be gripped.

9. Gripping element according to at least one of the preceding claims, **characterised in that** at least one arm (5, 6) has an inwardly protruding web (21).

10. Gripping element according to claim 9, **characterised in that** at least one web portion (21) has a bearing surface (22) which is adapted at least partially to a portion of the container that is to be gripped.

11. Gripping element according to at least one of the preceding claims, **characterised in that** at least one bearing surface (22) is enlarged in a direction which is substantially perpendicular to a plane formed by the arms (5, 6).

12. Gripping element according to at least one of the preceding claims, **characterised in that** at least one arm (5, 6) has a holding portion (9) which is curved in a substantially circular manner.

13. Gripping element according to claim 12, **characterised in that** a protrusion (11) is provided on at least one arm (5, 6) and points in the direction of the holding portion (9) which is curved in a substantially circular manner.

14. Gripping element according to at least one of the preceding claims, **characterised in that** the thickness of at least one arm (5, 6) decreases towards the holding portion (8, 9) in a direction perpendicular to the plane formed by the gripping arms.

15. Apparatus for transporting containers, comprising a gripping element (1) according to at least one of the preceding claims.

## Revendications

1. Élément (1) de préhension, en particulier pour des conteneurs, comportant une partie (3) de base et deux bras (5, 6) qui partent de la partie (3) de base, lesdits bras (5, 6) pouvant être déplacés et chacun des bras (5, 6) comportant une partie (8, 9) de retenue pour maintenir le conteneur,
**caractérisé en ce qu'**au moins un bras (5, 6) comporte, entre la partie (3) de base et la partie (8, 9) de retenue, une courbure de plus de 90° qui prolonge la longueur de ressort effective du bras (5, 6), sans agrandir la distance entre la partie (3) de base et la partie (8, 9) de retenue.

2. Élément de préhension selon la revendication 1, **caractérisé en ce que** les deux bras (5, 6) comportent une courbure de plus de 90°.

3. Élément de préhension selon l'une quelconque des revendications précédentes, **caractérisé en ce qu'**au moins un bras (5, 6) et, de préférence, les deux bras (5, 6) sont courbés vers l'intérieur par rapport à une zone (4) de réception pour les conteneurs.

4. Élément de préhension selon l'une quelconque des revendications précédentes, **caractérisé en ce que** l'élément (1) de préhension est réalisé d'un seul tenant.

5. Élément de préhension selon l'une quelconque des revendications précédentes, **caractérisé en ce que** l'élément (1) de préhension est réalisé dans une matière plastique.

6. Élément de préhension selon la revendication 5, **caractérisé en ce que** la matière plastique est choisie dans un groupe de matières plastiques, qui contient le PEEK, POM, Luvocom, Latan, PEPA, PTFE, des combinaisons de ceux-ci et similaires et, en particulier, le PEEK.

7. Élément de préhension selon l'une quelconque des revendications précédentes, **caractérisé en ce qu'**au moins un bras comporte un chanfrein d'introduction (16).

8. Élément de préhension selon l'une quelconque des revendications précédentes, **caractérisé en ce qu'**au moins un bras (5, 6) comporte une surface (18) de retenue, qui est prévue sur la partie de retenue (8, 9) et qui est ajustée au moins par zones à une partie à saisir du conteneur.

9. Élément de préhension selon l'une quelconque des revendications précédentes, **caractérisé en ce qu'**au moins un bras (5, 6) comporte une entretoise (21) s'avançant vers l'intérieur.

10. Élément de préhension selon la revendication 9, **caractérisé en ce qu'**au moins une entretoise (21) comporte une surface (22) d'appui, qui est ajustée au moins par zones à une partie à saisir du conteneur.

11. Élément de préhension selon l'une quelconque des revendications précédentes, **caractérisé en ce qu'**au moins une surface (22) d'appui est agrandie dans une direction qui est sensiblement perpendiculaire à un plan formé par les bras (5, 6).

12. Élément de préhension selon l'une quelconque des revendications précédentes, **caractérisé en ce qu'**au moins un bras (5, 6) comporte une partie (9) de retenue avec une courbure sensiblement circulaire.

13. Élément de préhension selon la revendication 12, **caractérisé en ce que** sur au moins un bras (5, 6) est prévue une saillie (11) qui est dirigée vers la partie (9) de retenue à courbure sensiblement circulaire.

14. Élément de préhension selon l'une quelconque des revendications précédentes, **caractérisé en ce que** l'épaisseur d'au moins un bras (5, 6) diminue vers la partie (8, 9) de retenue dans une direction qui est perpendiculaire au plan déployé par les bras de préhension.

15. Dispositif pour transporter des conteneurs avec un élément (1) de préhension selon l'une quelconque des revendications précédentes.
